# EUROPEAN PATENT APPLICATION

(11) **EP 4 847 277 A1**
(43) Date of publication of application: **02.12.2026**
(21) Application number: 26180257.3
(22) Date of filing: 21.05.2026
(51) Int. Cl.: B60C 13/00

(54) **TIRE**

(30) Priority: 29.05.2025 JP 2025089839
(71) Applicant: Toyo Tire Corporation, Itami-shi, Hyogo 664-0847 (JP)
(72) Inventor: SHINOZAKI, Shingo, Itami-shi, Hyogo, 664-0847 (JP)
(74) Representative: Müller-Boré & Partner Patentanwälte PartG mbB

(57) **Abstract**

A tire is provided having enhanced design characteristics. The tire (1) includes a pattern region (7) provided in a visually recognizable state as a different site than a surrounding of said part, in which the pattern region (7) arranges a plurality of unit patterns (100, 100B) each constituted by a projection, the unit pattern (100, 100B) includes: a pattern center point (O), and an overhang portion (110, 110B) including a first portion (101) in which the projection extends in a direction distancing from the pattern center point (O), and a second portion (102) in which the projection extends in a direction distancing from the pattern center point (O) to connect with the first portion (101) at a position distanced from the pattern center point (O), and a plurality of the overhang portions (110, 110B) are arranged on a circumference centered around the pattern center point (O).

## Description

This application is based on and claims the benefit of priority from Japanese Patent Application No. 2025-089839, filed on 29 May 2025, the content of which is incorporated herein by reference.

### BACKGROUND OF THE INVENTION

### Field of the Invention

The present disclosure relates to a tire.

### Related Art

There is a known tire having, on a part of a sidewall, a pattern region in which a large number of fine projections are aggregated (for example, Japanese Unexamined Patent Application, Publication No. 2020-131904). Such a pattern region, in which incident light is repeatedly reflected between the projections, has a light absorption effect, and consequently, the pattern region is visually recognized to be darker than the outer surface of the sidewall around the pattern region, whereby the contrast is enhanced. Provision of this type of pattern region contributes to improving the design effect and appearance of the tire.

Patent Document 1: Japanese Unexamined Patent Application Publication No. 2020-131904

### SUMMARY OF THE INVENTION

A pattern region disclosed in Patent Document 1 enhances the design characteristic by making appear darker than other parts. However, it is sought to not only be simply visibly recognized as black, but also have further enhanced design characteristics.

An object of the present disclosure is to provide a tire having enhanced design characteristics.

A tire according to the present disclosure includes a pattern region provided to at least part of an outer surface in a visually recognizable state as a different site than a surrounding of said part, in which the pattern region arranges a plurality of unit patterns each constituted by a projection rising up from a reference plane, the unit pattern, when viewed from a direction orthogonal to the reference plane, includes: a pattern center point which is a center of the unit pattern, and an overhang portion including a first portion in which the projection extends in a direction distancing from the pattern center point, and a second portion in which the projection extends in a direction distancing from the pattern center point to connect with the first portion at a position distanced from the pattern center point, and a plurality of the overhang portions are arranged on a circumference centered around the pattern center point.

According to the present disclosure, it is possible to provide a tire having enhanced design characteristics.

### BRIEF DESCRIPTION OF THE DRAWINGS

FIG. 1 is a side view for a tire 1 according to a first embodiment when viewed from a direction of a tire rotation axis line X;
FIG. 2 is a view showing a tire molding die for vulcanizing and molding the tire 1 according to the first embodiment;
FIG. 3 is a plan view of a plurality of unit patterns 100 arranged in a pattern region 7 when viewing from a direction orthogonal to a reference plane 7a;
FIG. 4 is a plan view magnified to show one of the unit patterns 100;
FIG. 5 is a cross-sectional view sectioning the unit pattern 100 at a position along the arrows A-A in FIG. 4;
FIG. 6 is a plan view of unit patterns 100 according to a second embodiment when viewing from a direction orthogonal to the reference plane 7a;
FIG. 7 is a plan view of unit patterns 100 according to a third embodiment when viewing from a direction orthogonal to the reference plane 7a; and
FIG. 8 is a plan view magnified to show one unit pattern 100 according to the third embodiment.

### DETAILED DESCRIPTION OF THE INVENTION

Hereinafter, aspects for implementing the present disclosure will be described by referencing the drawings, etc.

### (First Embodiment)

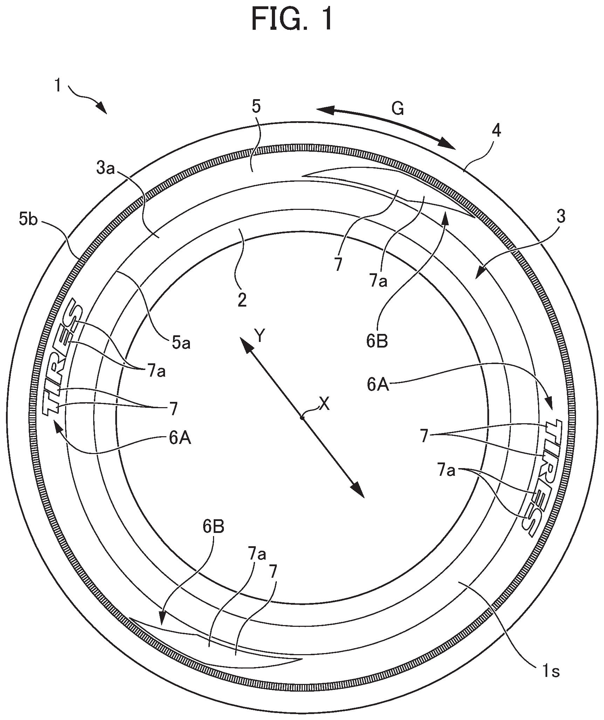

FIG. 1 is a side view of a tire 1 according to a first embodiment when viewing from a direction along the tire rotation axis line X. The tire 1 of the present embodiment is a so-called pneumatic tire in which a predetermined air pressure is filled in the inner cavity thereof. The tire 1 of the embodiment is a pneumatic tire for passenger vehicles including light duty vehicles, SUVs, etc. It should be noted that the configuration of the tire 1 according to the embodiment can also be applied to pneumatic tires for other vehicle types such as light trucks, trucks and buses, for example. In addition, the configuration of the present disclosure is similarly applicable even for non-pneumatic tires.

First, an outline of a configuration mainly related to a lateral surface of the tire 1 will be described by referencing FIG. 1. It should be noted that a tire axial direction, tire circumferential direction and tire radial direction referenced in the following description are as follows. Tire axial direction is the extending direction of a tire rotation axis line X, and is referenced as a paper plane front/back direction in FIG. 1. In addition, since the tire axial direction when viewing from the tire radial direction is the left/right direction, the tire axial direction may be referred to as left/right direction. Tire circumferential direction is a circular arc centered around the tire rotation axis line X, is a direction along the rotation direction of the tire 1, and is indicated by the arrow G in FIG. 1. Tire radial direction is a direction perpendicular to the tire rotation axis line X, and is arbitrarily indicated by the arrow Y in FIG. 1.

As illustrated in FIG. 1, the tire 1 includes beads 2, sidewalls 3 that continue from the beads 2 and extend outward in the tire radial direction away from the tire rotation axis line X, and a tread 4. One bead 2 and one sidewall 3 are provided on one side 1s of tire 1 illustrated in FIG. 1, and one bead 2 and one sidewall 3 are provided on the other side of the tire 1 spaced apart in the tire axial direction from the side 1s and not illustrated in FIG. 1. That is, the tire 1 includes the left and right beads 2 in pairs and the left and right sidewalls 3 in pairs. The tread 4 is disposed between the outer sides in the tire radial direction of the left and right sidewalls 3. The outer peripheral surface of the tread 4 includes a tread surface that contacts with a road surface.

The tire 1 is mainly composed of a plurality of types of rubbers respectively constituting the beads 2, the sidewalls 3, and the tread 4. A carcass ply that constitutes the skeleton of the tire 1 is disposed on an inner cavity-facing side of the rubber constituting the entire tire 1, and an inner liner that maintains an air pressure is disposed on an inner cavity-facing side of the carcass ply. An annular reinforcing belt is embedded in the rubber constituting the tread 4. The carcass ply, the inner liner, and the reinforcing belt are not illustrated. In addition to the foregoing components, various components are included as necessary in consideration of the function of the tire 1.

As illustrated in FIG. 1, the sidewall 3 has an outer surface 3a and an annular decorative region 5 extending on the outer surface 3a over the entire circumference in the tire circumferential direction. The decorative region 5 has a constant width and is defined between an inner arc line 5a and an outer arc line 5b. The inner arc line 5a is located inward in the tire radial direction and close to the tire rotation axis line X in the tire radial direction, and the outer arc line 5b is located outward in the tire radial direction with respect to the inner arc line 5a. Each of the inner arc line 5a and the outer arc line 5b may be a line formed as a concavity, a convexity, or a step on the outer surface 3a of the sidewall 3, or may be a virtual line that does not actually exist.

The tire 1 includes pattern regions 7 on parts of the outer surface 3a of the sidewall 3. Each pattern region 7 is visually recognizable as being different from the perimeter of the part where the pattern region 7 is provided. Each pattern region 7 is provided on a sidewall rubber that is a black rubber member constituting the outer surface of the sidewall 3.

As illustrated in FIG. 1, mark portions 6A are provided on the annular decorative region 5 at two positions opposite to each other across the tire rotation axis line X. Each mark portion 6A includes a plurality of characters arranged in the tire circumferential direction. By means of the plurality of characters, at least one of a manufacturer name, a product name, a brand mark, or the like is displayed. Each character may be bordered with a concave or convex line, or the entirety of each character may be formed of a concavity or convexity. For example, the characters of the mark portions 6A are provided as the pattern regions 7 of the embodiment.

As illustrated in FIG. 1, motif portions 6B are provided on the annular decorative region 5 at two positions each of which is sandwiched between the two mark portions 6A in the circumferential direction. Each motif portion 6B includes a motif like a parallelogram curved along the annular decorative region 5. For example, the motifs of the motif portions 6B are also provided as the pattern regions 7 of the embodiment.

It should be noted that the shapes of the pattern regions 7 are not limited to the foregoing shapes, and various shapes may be adopted, examples of which include an arbitrary shape, shapes delineating the above-mentioned manufacturer name, product name, brand mark, etc., and shapes delineating other numerals, characters, etc.

Each of the above-mentioned respective pattern regions 7 of the first embodiment includes a reference plane 7a along a profile of the sidewall 3. In this reference plane 7a, a plurality of the unit patterns 100 described later are formed. By a plurality of the unit patterns 100 being formed therein, the pattern region 7 is a region provided in a visually recognizable state as a different site than the surroundings of this pattern region 7. It should be noted that the reference plane 7a may overhang from the profile of the sidewall 3 to the outer side in the tire axial direction, may indent from the profile of the sidewall 3 to the inner side in the tire axial direction, or may be a surface at the same position in the tire axial direction as the profile of the sidewall 3.

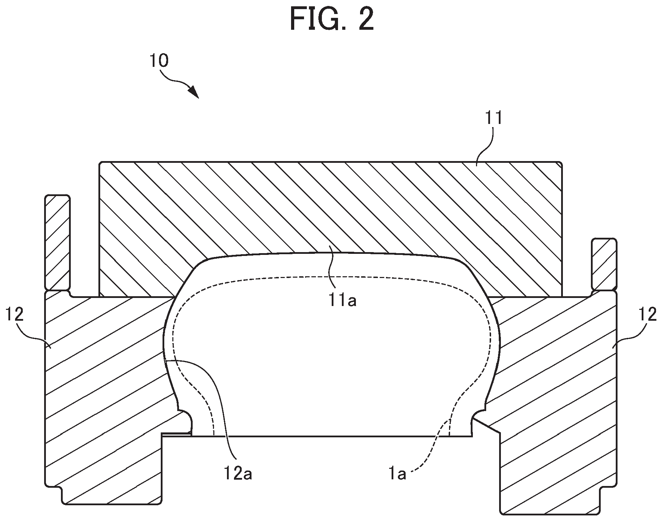

FIG. 2 is a view showing an example of a tire molding die for vulcanizing and molding the tire 1 according to the first embodiment. FIG. 2 is a meridian line cross-sectional view along the axial direction of the tire 1 molded in such a tire molding die 10.

The tire molding die 10 illustrated in FIG. 2 includes a plurality of sectors 11 arranged circumferentially along the outer circumference of the tire 1, a pair of side plates 12 disposed at both axial sides of an annular body formed by the plurality of sectors 11 combined with each other, and a pair of bead rings (not shown). At the time of vulcanization molding, an unvulcanized tire 1a to be molded into the tire 1 is set inside the tire molding die 10, as indicated by the broken line in FIG. 2. The assembly of the sectors 11, the side plates 12, and the bead rings constitutes the mold for molding the tire 1, and the entire outer surface of the tire 1 is molded by the inner surface of the mold, namely, the inner surfaces 11a of the sectors 11, the inner surfaces 12a of the side plates 12, and the inner surfaces of the bead rings. During vulcanization molding, a bladder (not shown) that presses the unvulcanized tire 1a against the inner surface of the tire molding die 10 is disposed inside the unvulcanized tire 1a. The plurality of sectors 11 mainly play a role in forming the tread 4, and the pair of side plates 12 mainly play a role in forming the sidewalls 3. The pair of bead rings play a role in forming the beads 2, and the bladder plays a role in forming the entire inner surface of the tire 1.

An unvulcanized tire 1a is vulcanized whereby the rubber shape of the tire 1 overall is formed by the tire molding die 10, and the plurality of unit patterns 100 described next are formed in the aforementioned pattern region 7. The inner surface 12a of a side plate 12 includes a projection forming portion (not shown) including a plurality of recess portions corresponding to the unit patterns 100.

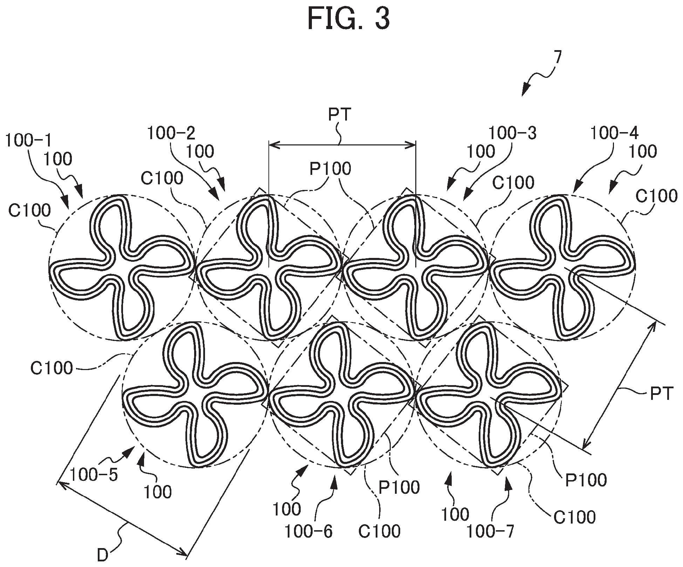

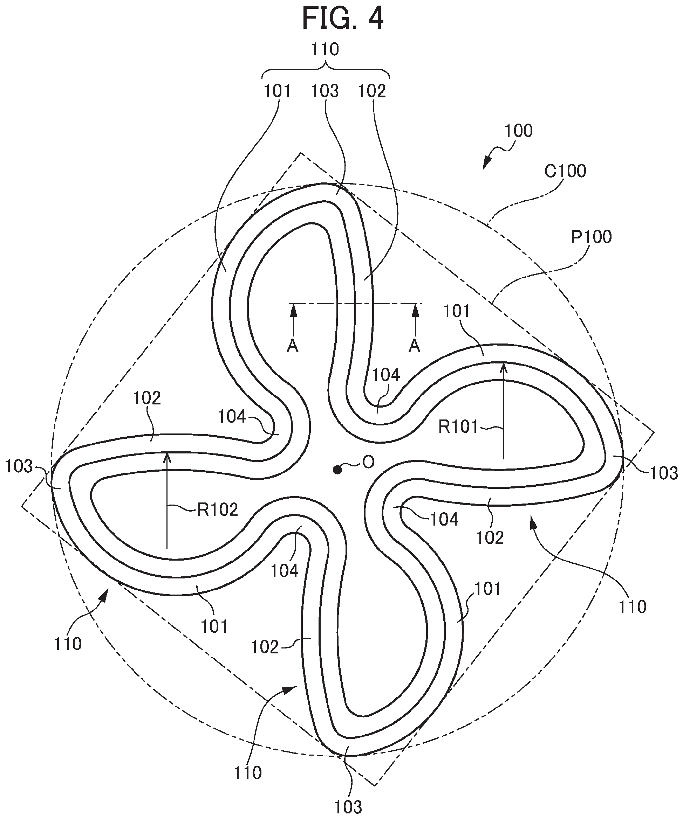

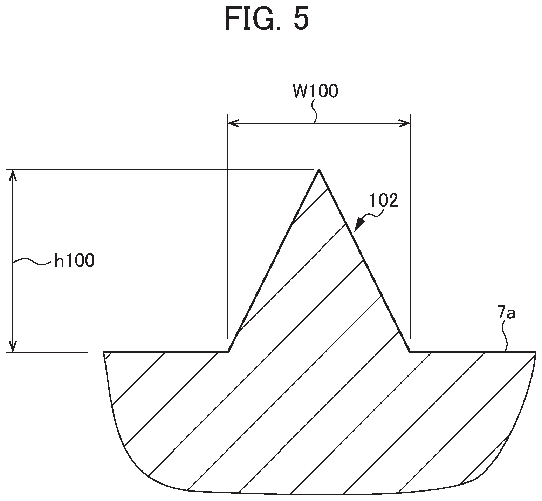

FIG. 3 is a plan view of the plurality of unit patterns 100 arranged in the pattern region 7 when viewing from a direction orthogonal to the reference plane 7a. FIG. 4 is a plan view magnified to show one unit pattern 100. FIG. 5 is a cross-sectional view sectioning the unit pattern 100 at a position along the arrows A-A in FIG. 4. As shown in FIG. 3, the plurality of unit patterns 100 are aligned in rows in the pattern region 7. FIG. 3 exemplifies a state in which the seven unit patterns 100 of unit patterns 100-1, 100-2, 100-3, 100-4, 100-5, 100-6 and 100-7 are arranged as the unit patterns 100; however, in practice, more unit patterns 100 than this may be arranged, or may be fewer. In the present embodiment, the unit pattern 100-1 to unit pattern 100-7 are all formed in the same shape.

Each unit pattern 100 is configured by a projection rising up from the reference plane 7a in a ridge shape as shown in FIG. 5 extending on the reference plane 7a as shown in FIG. 4. It should be noted that, although FIG. 5 shows a cross section of a second portion 102 described later, for other portions of the unit pattern 100, the cross-sectional shape in a direction orthogonal to the extending direction of the projection is the same as the cross-sectional shape in FIG. 5.

As shown in FIG. 4, the unit pattern 100 includes a pattern center point O and overhang portions 110, when viewing from a direction orthogonal to the reference plane 7a. The pattern center point O is the center of the unit pattern 100. The pattern center point O of the present embodiment is a virtual point, and is not a visible structure.

Each overhang portion 110 is configured in a shape overhanging to a direction distancing from the pattern center point O, and a plurality thereof are arranged on a circumference centered around the pattern center point O. Although four of the overhang portions 110 are aligned in the present embodiment, the number thereof may be 3, or may be 4 or more, for example. However, to obtain an effect of improving the ease of manufacture and the design characteristics, the number of the overhang portions 110 arranged is desirably 3 or more and 6 or less. The overhang portion 110 includes a first portion 101, a second portion 102, a tip connection portion 103 and a base connection portion 104.

In the first portion 101, the projection extends in a direction distancing from the pattern center point O, and the projection extends at one side of the overhang portion 110 so as to make a convex shape.

In the second portion 102, the projection extends in a direction distancing from the pattern center point O, and connects with the first portion 101 at the tip connection portion 103, which is at a position distanced from the pattern center point. In the second portion 102, the projection extends at the other side different from the one side at which the first portion 101 makes a convex shape, so as to make a convex or linear shape.

When viewing from a direction orthogonal to the reference plane 7a, the radius of curvature of a curved line at the apex of the projection at which the first portion 101 makes a convex shape on one side is defined as R101. Similarly, when viewing from a direction orthogonal to the reference plane 7a, if defining the radius of curvature of a curved line at the apex of the projection at which the second portion 102 makes a convex shape on the other side as R102, they satisfy the relationship of R101 < R102 in the overhang portion 110.

The tip connection portion 103 is a portion at which the first portion 101 and the second portion 102 connect on a side distanced from the pattern center point O, and when viewing from a direction orthogonal to the reference plane 7a, is configured by a curved line smoothly connecting the first portion 101 and the second portion 102.

The base connection portion 104 is a portion at which adjacent overhang portions 110 connect on the side of the pattern center point O. In other words, an end adjacent to the pattern center point O of the first portion 101 of one overhang portion 110 is connected to an end adjacent to the pattern center point O of the second portion 102 of the other overhang portion 110 which is adjacent thereto in the circumferential direction. The base connection portion 104 is configured by a curved line smoothly connecting the first portion 101 and the second portion 102, when viewing from a direction orthogonal to the reference plane 7a.

As shown in FIGS. 3 and 4, due to the unit pattern 100 making an intricate, complicated shape, a circumscribed circle C100 and a circumscribed polygon P100 are used so as to be able to show the shape of the unit pattern 100 overall and the arrangement state. In FIGS. 3 and 4, the circumscribed circle C100 is shown by the two-dot dashed circle, and the circumscribed polygon P100 is shown by the one-dot dashed line square. The circumscribed circle C100 is a circle centered around the pattern center point O, and passing through the outer end portion of each of the overhang portions 110. The circumscribed polygon P100 is a polygonal shape circumscribing the unit pattern 100 formed by connecting the outer end portions of adjacent overhang portions 110. Therefore, in the present embodiment in which there are four adjacent overhang portions 110, the circumscribed polygon P100 is a square.

When viewing from a direction orthogonal to the reference plane 7a, if defining the diameter D of the circumscribed circle C100 (refer to FIG. 3) as the unit pattern width, the unit pattern width is desirably 1 mm or more and 5 mm or less. This is because, if the unit pattern width is less than 1 mm, the production of the unit pattern 100 becomes difficult, and the unit pattern 100 will no longer be observable as a design, and if exceeding 5 mm, the effect of making appear black will be insufficient.

In addition, in the present embodiment, as shown in FIG. 3, the unit patterns 100 are aligned, so as to make a dense arrangement in which the circumscribed circles C100 of adjacent unit patterns 100 abut in a two-dimensional hexagonal close packing.

In addition, in the present embodiment, as shown in FIG. 3, when viewing from a direction orthogonal to the reference plane 7a, the circumscribed polygons P100 are separated from the circumscribed polygon P100 of other adjacent unit patterns 100.

In addition, the area ratio occupied by the projection relative to the area of the circumscribed polygon P100 of the unit pattern 100 is desirably 20% or more and 60% or less. This is because, when the area ratio occupied by the projection relative to the area of the circumscribed polygon P100 is less than 20%, the effect of the pattern region 7 making appear darker than other regions becomes insufficient, and if exceeding 60%, the ratio of the area where the reference plane 7a appears becomes too small, and it is difficult for the unit pattern 100 to be observed as a design, and the light reflection component of the reference plane 7a becomes small, and thus the change in appearance due to the observation direction changing becomes smaller.

As shown in FIG. 5, the unit pattern 100 of the present embodiment assumes a cross-sectional shape of substantially triangular shape in which the cross-sectional shape of a section orthogonal to the extending direction of the projection protrudes in a roof shape. However, the cross-sectional shape of this projection can be modified as appropriate. For example, the cross-sectional shape of a sloped surface linking the reference plane 7a and the apex of the projection is not limited to a line as in FIG. 5, and may assume a curved line bending to the outer side or inner side. In addition, the apex of the projection is not limited to a pointed shape as illustrated, and may be rounded, or may be formed in a flat surface.

In addition, the height h100 by which the projection of the unit pattern 100 rises up from the reference plane 7a (refer to FIG. 5) is desirably 0.2 mm or more and 1.25 mm or less. This is because, when h100 is less than 0.2 mm, the effect of making appear black becomes insufficient, and when exceeding 1.25 mm, the durability of the projection becomes insufficient.

In addition, the width W100 of the projection of the unit pattern 100 (refer to FIG. 5) is desirably 0.2 mm or more and 0.5 mm or less. This is because, when W100 is less than 0.2 mm, the durability of the projection becomes insufficient, and when exceeding 0.5 mm, the effect of making appear black becomes insufficient.

In addition, the arrangement pitch PT of the unit patterns 100 (refer to FIG. 3), i.e. distance between pattern center points O of adjacent unit patterns 100, is desirably 1.0 mm or more and 5.0 mm or less. This is because, when PT is less than 1.0 mm, it becomes difficult to observe as a design, and when exceeding 5.0 mm, the effect of making appear black becomes insufficient.

In the first embodiment, due to including the pattern region 7 in which a plurality of the aforementioned unit patterns 100 are arranged, the pattern region 7 is observed as a different site than its surroundings. More specifically, a part of the light reaching the pattern region 7 reflects to a different direction than the direction in which the reference plane 7a reflects light due to the unit patterns 100. In addition, the unit patterns 100 shield a part of the light reflected by the reference plane 7a. By these actions, the pattern region 7 appears to be darker than the surroundings, due to the light advancing toward the observer becomes less than the surrounding thereof.

In addition, when comparing with a conventional structure in which fine projections are densely arranged, the ratio of the reference plane 7a remaining exposed is very large in the pattern region 7 of the present embodiment. For this reason, the ratio of light reflected from the reference plane 7a reaching the observer directly is large compared to conventional. Consequently, the appearance of the reference plane 7a and unit pattern 100 varies depending on the viewing angle, and thus the appearance of the pattern region 7 changes. Furthermore, since the shapes differ between the first portion 101 and the second portion 102, and the overhang portions 110 are arranged to overhang in different directions, how light reflects on the unit pattern 100 will vary depending on the viewing angle, and thus the appearance of the pattern region 7 differs.

Furthermore, since the unit pattern width of the unit pattern 100, i.e. diameter D of the circumscribed circle C100, is set to the aforementioned appropriate range, and thus the effect of making the pattern region 7 appear darker than the surroundings is obtained, if observing from relatively near, the design of the unit pattern 100 will be recognizable by eye, and the pattern region 7 is visually recognizable as a region imparted with a design, and thus further enhanced design characteristics can be exhibited.

### (Second Embodiment)

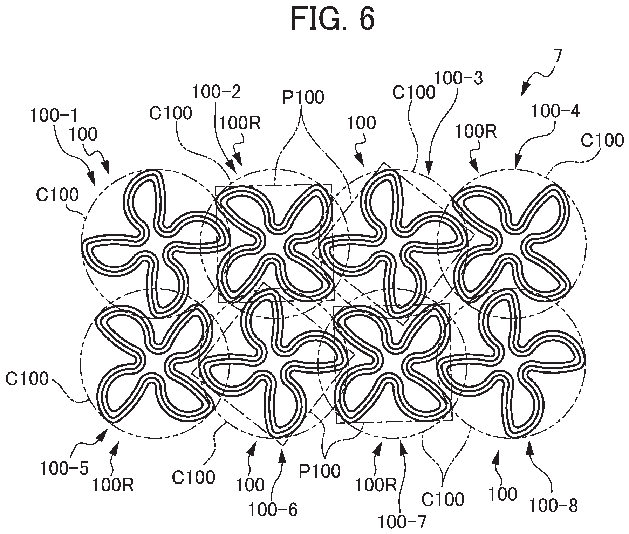

FIG. 6 is a plan view of a unit pattern 100 according to a second embodiment when viewing from a direction orthogonal to the reference plane 7a. When viewing from a direction orthogonal to the reference plane 7a, the pattern region 7 according to the second embodiment differs from the first embodiment in the point of a partial shape of the unit pattern 100 assumes a shape by inverting another unit pattern 100, and the point of the unit pattern 100 and an inverted unit pattern 100R described later being arranged closer together. Other points of the second embodiment are the same as the first embodiment. Consequently, the same reference numbers are attached to portions performing the same function as the aforementioned first embodiment, and redundant descriptions will be omitted where appropriate.

FIG. 6 exemplifies a state in which the eight unit patterns 100 of unit patterns 100-1, 100-2, 100-3, 100-4, 100-5, 100-6, 100-7 and 100-8 are arranged as the unit patterns 100. Among these unit patterns 100, the unit patterns 100-1, 100-3, 100-6 and 100-8 are the same shape as the unit pattern 100-1 to unit pattern 100-7 in the first embodiment. On the other hand, the unit patterns 100-2, 100-4, 100-5 and 100-7 of the second embodiment assume a shape made by front/back inverting the shape of the unit pattern 100-1 viewed from a direction orthogonal to the reference plane 7a. However, the orientation in which the projection protrudes is the near side of the paper plane, same as the unit pattern 100-1. In the following description, the unit patterns 100-2, 100-4, 100-5 and 100-7 of the above-mentioned inverted shape shall be cumulatively designated as inverted unit pattern 100R.

With the pattern region 7 of the second embodiment, the unit patterns 100 and the inverted unit patterns 100R are arranged to be adjacent. In addition, the overhang portion 110 of the unit pattern 100 is arranged so as to be arranged at a position partially sandwiched between two overhang portions 110 of the inverted unit pattern 100R. The adjacent unit pattern 100 and inverted unit pattern 100R are thereby arranged more closely. In other words, in the pattern region 7 of the second embodiment, the adjacent circumscribed circles C100 overlap, and further, the adjacent circumscribed polygons P100 also overlap. In this way, by the adjacent unit patterns 100 and inverted unit patterns 100R being arranged more closely, it is possible to further enhance the effect of the pattern region 7 making appear darker than surrounding regions thereof. In addition, due to using the inverted unit patterns 100R which are inverting the basic shape of the unit pattern 100 without changing it, it is possible to enhance the effect of making appear black while maintaining a certain design having a sense of unity as a whole.

### (Third Embodiment)

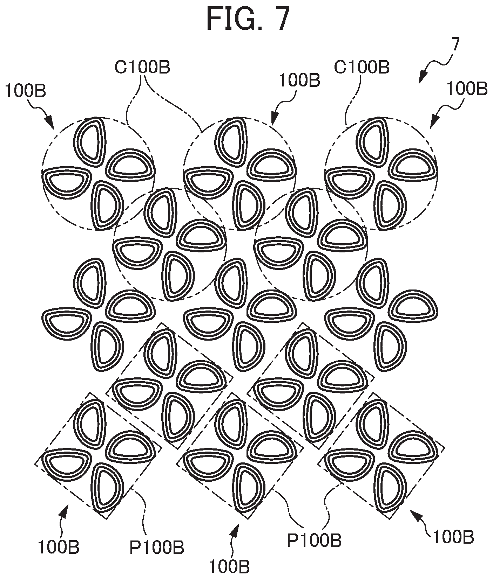

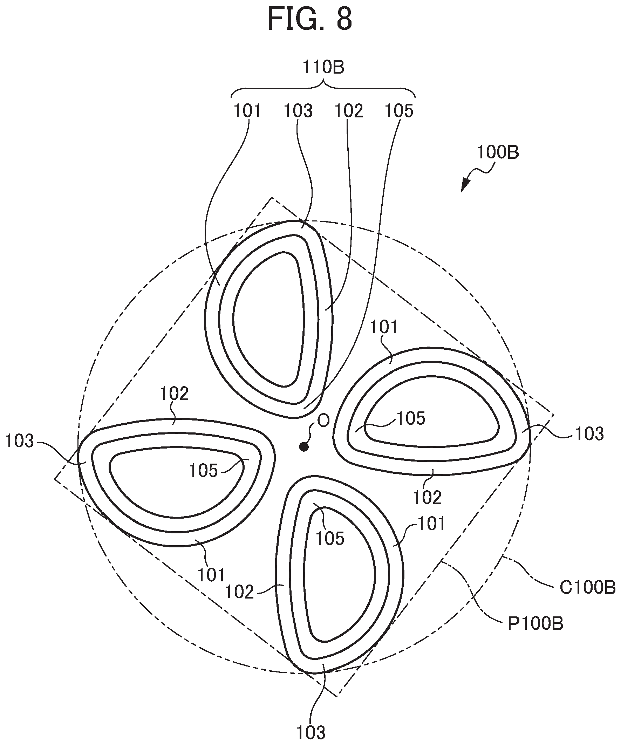

FIG. 7 is a plan view of a unit pattern 100 according to a third embodiment when viewing from a direction orthogonal to the reference plane 7a. FIG. 8 is a plan view magnified to show one unit pattern 100 of the third embodiment. The pattern region 7 of the third embodiment differs from the first embodiment in the point of the shape of a unit pattern 100B viewed from a direction orthogonal to the reference plane 7a differing from the unit pattern 100 of the first embodiment, and the point of arranging unit patterns 100B more closely. Other points in the third embodiment are the same as the first embodiment. Consequently, the same reference numbers are attached to portions performing the same function as the aforementioned first embodiment, and redundant descriptions will be omitted where appropriate.

In the unit pattern 100B of the third embodiment, the first portion 101 and the second portion 102 connect at a central connection portion 105 on the side of the pattern center point O. The central connection portion 105 is a portion at which the first portion 101 and the second portion 102 connect on a side near the pattern center point O, and when viewing from a direction orthogonal to the reference plane 7a, is configured by a curved line smoothly connecting the first portion 101 and the second portion 102.

In the unit pattern 100B of the third embodiment, the first portion 101 and the second portion 102 connect at the tip connection portion 103 and central connection portion 105 to constitute one overhang portion 110B of closed shape. Then, centered around the pattern center point O, four of the overhang portions 110B are arranged on the circumference, and constitute one unit pattern 100B.

As shown in FIG. 7, in the pattern region 7 of the third embodiment, circumscribed circles C100B of adjacent unit patterns 100B are arranged overlapping. On the other hand, the circumscribed polygons P100B of adjacent unit patterns 100B are separated.

Even if the overhang portions 110B are arranged independently without linking as in the unit pattern 100B of the third embodiment, it is possible to obtain similar effects as the first embodiment.

The following effects are exerted by the tire 1 according to the aforementioned embodiments.
(1) The tire 1 according to the present embodiment includes: a pattern region 7 provided to at least part of an outer surface in a visually recognizable state as a different site than a surrounding of said part, in which the pattern region 7 arranges a plurality of unit patterns 100, 100R, 100B each constituted by a projection rising up from a reference plane 7a, the unit pattern 100, 100R, 100B, when viewed from a direction orthogonal to the reference plane 7a, includes: a pattern center point O which is a center of the unit pattern 100, 100R, 100B, and an overhang portion 110, 110B including a first portion 101 in which the projection extends in a direction distancing from the pattern center point O, and a second portion 102 in which the projection extends in a direction distancing from the pattern center point O to connect with the first portion 101 at a position distanced from the pattern center point O, and a plurality of the overhang portions 110, 110B are arranged on a circumference centered around the pattern center point O.
   It is thereby possible to provide a tire in which the pattern region 7 not only makes appear darker than the surroundings, but also the unit patterns 100, 100R, 100B can be observed as a design, and thus has enhanced design characteristics.
(2) In the tire 1 as described in (1), in the first portion 101, the projection extends so as to make a convex shape at one side, and in the second portion 102, the projection extends so as to make a convex or linear shape at another side different from the one side.
   It is thereby possible to increase the variation in appearance of the pattern region 7 also depending on the observation angle.
(3) In the tire 1 as described in (1) or (2), the first portion 101 and the second portion 102 connect at a side of the pattern center point O.
   The overhang portion 110B is thereby independently observable, and a more detailed design can be realized.
(4) In the tire 1 as described in any one of (1) to (3), an end portion on a side of the pattern center point O of the first portion 101 of one of the overhang portions 110 is connected with an end portion on a side of the pattern center point O of the second portion 102 of another one of the overhang portions 110 adjacent in a circumferential direction.
   A plurality of the overhang portions 110 can thereby be observed collectively as one design, and thus a larger design can be realized.
(5) In the tire 1 as described in any one of (1) to (4), when a diameter of a circumscribed circle C100, C100B centered around the pattern center point O, and passing through each outer end portion of the overhang portions 110, 110B is defined as a unit pattern width, the unit pattern width is 1 mm or more and 5 mm or less.
   The unit patterns 100, 100R and 100B are thereby observable as designs, and the pattern region 7 can be made observable darker than the surroundings.
(6) In the tire 1 as described in any one of (1) to (5), the overhang portions 110, 110B are arranged at equal intervals on a circumference centered around the pattern center point O, and a circumscribed polygon P100, P100B of the unit pattern 100, 100R, 100B formed by connecting outer end portions of the overhang portions 110, 110B that are adjacent is separated from a circumscribed polygon P100, P100B of another one of the unit patterns 100, 100R, 100B adjacent thereto.
   Thereby, each unit pattern 100, 100R and 100B can be made easily observable as independent designs.
(7) In the tire 1 as described in any one of (1) to (6), the overhang portions 110, 110B are arranged at equal intervals on a circumference centered around the pattern center point O, and a circumscribed polygon P100, P100B of the unit pattern 100, 100R, 100B formed by connecting outer end portions of the overhang portions 110, 110B which are adjacent overlaps with a circumscribed polygon P100, P100B of another one of the unit patterns 100, 100R, 100B adjacent thereto.
   The effect of the pattern region 7 making appear darker than the surroundings can thereby be further enhanced.
(8) In the tire 1 as described in any one of (1) to (7), a number of the overhang portions 110, 110B included in the unit pattern 100, 100R, 100B is 3 or more and 6 or less.
   Manufacture can thereby be facilitated, and the design characteristics can be enhanced.
(9) In the tire 1 as described in any one of (1) to (8), a height by which the projection rises up from the reference plane 7a is 0.2 mm or more and 1.25 mm or less.
   The effect of making appear black can thereby be sufficiently obtained, and the durability of the projections can be sufficiently maintained.
(10) In the tire 1 as described in any one of (1) to (9), the pattern region includes an inverted unit pattern 100R obtained by inverting the unit pattern 100 when viewing from a direction orthogonal to the reference plane 7a, and the unit pattern 100 and the inverted unit pattern 100R are arranged adjacent to each other.
   It is thereby possible to arrange the unit patterns 100 and inverted unit patterns 100R closer to each other, and the effect of making the pattern region 7 darker than the surroundings can be enhanced.
(11) In the tire 1 as described in any one of (1) to (10), an area ratio occupied by the projections relative to an area of a circumscribed polygon P100, P100B of the unit pattern 100, 100R, 100B formed by connecting outer end portions of the overhang portions 110, 110B that are adjacent is 20% or more and 60% or less.
   The unit patterns 100, 100R and 100B can thereby be made observable as designs, while sufficiently obtaining the effect of the pattern region 7 making appear darker than other regions, and further, it is possible to obtain variation in appearance by the observation angle changing.

### (Modified Embodiments)

Not limiting to the embodiments described above, various modifications and changes are possible, and these are also within the scope of the present disclosure.

(Modified Embodiment 1) Each embodiment has been described giving an example in which one unit pattern 100, 100B is constituted by four of the overhang portions 110, 110B. Not limiting thereto, the number of overhang portions may vary as appropriate.

(Modified Embodiment 2) Each embodiment has been described giving an example arranging unit patterns of the same shape or inverted shapes. Not limiting thereto, for example, unit patterns of different shapes may be further arranged. For example, the unit pattern 100 of the first embodiment and the unit pattern 100B of the second embodiment may be arranged alternately.

It should be noted that, although the embodiments and modified embodiments can be used in combination where appropriate, detailed descriptions thereof are omitted. In addition, the present disclosure is not to be limited by each of the embodiments described above.

## Claims

1. A tire (1) comprising:
a pattern region (7) provided to at least part of an outer surface (3a) in a visually recognizable state as a different site than a surrounding of said part, wherein
the pattern region (7) arranges a plurality of unit patterns (100, 100B) each constituted by a projection rising up from a reference plane (7a),
the unit pattern (100, 100B), when viewed from a direction orthogonal to the reference plane (7a), includes:
a pattern center point (O) which is a center of the unit pattern (100, 100B), and
an overhang portion (110, 110B) including a first portion (101) in which the projection extends in a direction distancing from the pattern center point (O), and a second portion (102) in which the projection extends in a direction distancing from the pattern center point (O) to connect with the first portion (101) at a position distanced from the pattern center point (O), and
a plurality of the overhang portions (110, 110B) are arranged on a circumference centered around the pattern center point (O).

2. The tire (1) according to claim 1,
wherein, in the first portion (101), the projection extends so as to make a convex shape at one side, and in the second portion (102), the projection extends so as to make a convex or linear shape at another side different from the one side.

3. The tire (1) according to claim 1 or 2,
wherein the first portion (101) and the second portion (102) connect at a side of the pattern center point (O).

4. The tire (1) according to claim 1 or 2,
wherein an end portion on a side of the pattern center point (O) of the first portion (101) of one of the overhang portions (110, 110B) is connected with an end portion on a side of the pattern center point (O) of the second portion (102) of another one of the overhang portions (110, 110B) adjacent in a circumferential direction.

5. The tire (1) according to claim 1 or 2,
wherein, when a diameter of a circumscribed circle centered around the pattern center point (O), and passing through each outer end portion of the overhang portions (110, 110B) is defined as a unit pattern width, the unit pattern width is 1 mm or more and 5 mm or less.

6. The tire (1) according to claim 1 or 2,
wherein the overhang portions (110, 110B) are arranged at equal intervals on a circumference centered around the pattern center point (O), and
wherein a circumscribed polygon (P100, P100B) of the unit pattern (100, 100B) formed by connecting outer end portions of the overhang portions (110, 110B) that are adjacent is separated from a circumscribed polygon (P100, P100B) of another one of the unit patterns (100, 100B) adjacent thereto.

7. The tire (1) according to claim 1 or 2,
wherein the overhang portions (110, 110B) are arranged at equal intervals on a circumference centered around the pattern center point (O), and
wherein a circumscribed polygon (P100, P100B) of the unit pattern (100, 100B) formed by connecting outer end portions of the overhang portions (110, 110B) which are adjacent overlaps with a circumscribed polygon (P100, P100B) of another one of the unit patterns (100, 100B) adjacent thereto.

8. The tire (1) according to claim 1 or 2,
wherein a number of the overhang portions (110, 110B) included in the unit pattern (100, 100B) is 3 or more and 6 or less.

9. The tire (1) according to claim 1 or 2,
wherein a height by which the projection rises up from the reference plane (7a) is 0.2 mm or more and 1.25 mm or less.

10. The tire (1) according to claim 1 or 2,
wherein the pattern region includes an inverted unit pattern (100R) obtained by inverting the unit pattern (100, 100B) when viewing from a direction orthogonal to the reference plane (7a), and the unit pattern (100, 100B) and the inverted unit pattern (100R) are arranged adjacent to each other.

11. The tire (1) according to claim 1 or 2,
wherein an area ratio occupied by the projections relative to an area of a circumscribed polygon (P100, P100B) of the unit pattern (100, 100B) formed by connecting outer end portions of the overhang portions (110, 110B) that are adjacent is 20% or more and 60% or less.
